# FASCICULE DE BREVET EUROPEEN

(11) **EP 1 746 700 B1**
(45) Date de publication et mention de la délivrance du brevet: **23.07.2008**
(21) Numéro de dépôt: 06115430.8
(22) Date de dépôt: 14.06.2006
(51) Int. Cl.: H02H 3/20, H02M 5/458

(54) **Dispositif d'alimentation d'un variateur de vitesse**
Stromversorgungsvorrichtung eines Geschwindigkeitsreglers
Power supply apparatus of a speed regulator

(30) Priorité: 18.07.2005 FR 0552221
(43) Date de publication de la demande: 24.01.2007
(73) Titulaire: Schneider Toshiba Inverter Europe SAS, 27120 Pacy sur Eure (FR)
(72) Inventeur: Grbovic, Petar Schneider Toshiba Inv.Europ.SAS, 33 rue André Blanchet 27120 PACY s/Eure (FR)
(74) Mandataire: Dufresne, Thierry

(56) Documents cités:
- EP-A- 0 313 366
- DE-A1- 10 001 497
- US-A1- 2005 041 443

## Description

La présente invention se rapporte à un variateur de vitesse de type convertisseur de fréquence destiné au contrôle/commande d'un moteur électrique. Plus particulièrement, l'invention se rapporte à un dispositif d'alimentation d'une unité de contrôle d'un variateur de vitesse ainsi qu'à une méthode de mise sous tension d'un variateur de vitesse.

Le document DE100 01 497A1 divulgue un variateur de vitesse ayant un redresseur principal et un redresseur auxiliaire qui alimente une unité de contrôle.

De façon connue, les variateurs de vitesse de type convertisseur de fréquence comportent un module ou pont redresseur principal qui est chargé de redresser une tension provenant d'une source extérieure d'alimentation électrique alternative (par exemple un réseau électrique triphasé 380Vac) pour fournir une tension continue sur un bus continu principal (par exemple de l'ordre de 400 à 800Vcc suivant les conditions d'utilisation du moteur). Les variateurs de vitesse comportent ensuite un module onduleur qui est chargé, à partir de ce bus principal, de commander un moteur électrique triphasé avec une tension d'amplitude et de fréquence variables. Pour cela, le module redresseur principal et le module onduleur sont dotés de composants électroniques semiconducteurs de puissance, par exemple constitués d'une diode et d'un thyristor par phase pour le module redresseur et constitués de deux transistors de puissance et deux diodes par phase pour le module onduleur.

Une unité de contrôle électronique est notamment chargée de piloter les thyristors du module redresseur principal et les transistors du module onduleur. Cette unité de contrôle est habituellement alimentée par une alimentation à découpage (ou alimentation de type SMPS : Switch Mode Power Supply) du variateur de vitesse.

L'alimentation à découpage est généralement alimentée à partir de la tension du bus principal. Néanmoins, au moment de la mise sous tension du variateur, le bus principal n'est pas encore chargé et ne fournit donc pas de courant. L'alimentation à découpage ne peut alors pas alimenter l'unité de contrôle, laquelle n'est donc pas capable de piloter les thyristors du module redresseur principal empêchant ainsi de charger le bus principal. Il est donc nécessaire de fournir une source d'alimentation supplémentaire pour l'alimentation à découpage lors de la mise sous tension du variateur, avant que le bus principal ne soit chargé.

Cette source supplémentaire peut provenir d'un module redresseur auxiliaire comprenant une diode redresseuse par phase et raccordé entre la source extérieure triphasée et l'alimentation à découpage. Cette source d'alimentation supplémentaire fournit alors un bus continu auxiliaire raccordé à l'alimentation à découpage, permettant à celle-ci d'alimenter l'unité de contrôle dès la mise sous tension du variateur de façon à pouvoir commander les thyristors du module redresseur principal pour charger ainsi le bus continu principal.

Cependant, avec ce type de schéma d'alimentation, il peut alors se produire un rebouclage entre le bus principal, le bus auxiliaire et un éventuel circuit de retour à la terre via le réseau extérieur, en particulier en cas de légère fuite à la terre du variateur (non détectée par un circuit de protection) ou en cas d'utilisation de longs câbles moteur blindés (notamment si le moteur à commander est éloigné du variateur ou si le variateur commande plusieurs moteurs en parallèle). Dans ce cas, lorsque la tension du bus principal est élevée, par exemple durant les phases de freinage moteur, il y a alors un risque de surtension très importante du bus auxiliaire entraînant un danger de destruction ou d'endommagement de l'alimentation à découpage et/ou de la capacité de bus auxiliaire.

Pour éviter ce phénomène, une solution consiste à utiliser deux alimentations à découpage distinctes. Une première alimentation est connectée au bus principal et alimente une unité de contrôle chargée de piloter les transistors de puissance du module onduleur. Une seconde alimentation auxiliaire est connectée au bus auxiliaire et alimente une unité de contrôle chargée de piloter les thyristors de puissance du module redresseur principal, au moins durant une phase de démarrage. Néanmoins, cette solution s'avère coûteuse et encombrante.

Une autre solution consiste à n'utiliser que des diodes de redressement et des résistances dans le module redresseur principal, sans avoir besoin de thyristors de puissance et donc sans avoir besoin de l'unité de contrôle pour charger le bus principal. Néanmoins, cette solution n'est envisageable que pour des petits variateurs car elle nécessite l'emploi de résistances de forte puissance et d'un contacteur volumineux. De plus, elle ne permet pas un démarrage progressif et régulé de la charge du bus principal.

C'est pourquoi l'invention se propose de pallier à ces inconvénients en présentant une solution dans laquelle une alimentation à découpage permet d'alimenter l'unité de contrôle d'un variateur de vitesse dès la mise sous tension du variateur tout en évitant les risques de surtension précités.

Pour cela, l'invention décrit un variateur de vitesse pour moteur électrique, comprenant un module redresseur principal comportant des thyristors de puissance pour alimenter un bus continu principal à partir d'un réseau d'alimentation extérieur, un module onduleur fournissant une tension de commande variable au moteur à partir du bus principal, un module redresseur auxiliaire relié au réseau d'alimentation extérieur, une unité de contrôle électronique commandant les thyristors de puissance, un module alimentation alimentant l'unité de contrôle à partir du module redresseur auxiliaire et du module redresseur principal. Le variateur de vitesse comporte un dispositif de commutation piloté par l'unité de contrôle et raccordé entre le module alimentation et le module redresseur auxiliaire.

Selon une caractéristique, une première résistance est connectée entre le module alimentation et le module redresseur auxiliaire et une seconde résistance, de valeur inférieure à la première résistance, est connectée entre le module alimentation et le bus principal.

Selon une autre caractéristique, le dispositif de commutation comprend un relais ayant une bobine de commande commandée par l'unité de contrôle et un contact à ouverture raccordé entre le module d'alimentation et le module redresseur auxiliaire.

L'invention décrit aussi une méthode de mise sous tension du variateur comportant une première étape dans laquelle le module alimentation est alimenté par le module redresseur auxiliaire, une seconde étape dans laquelle l'unité de contrôle pilote les thyristors de puissance pour charger le bus continu principal et une troisième étape dans laquelle l'unité de contrôle ouvre le dispositif de commutation placé entre le module alimentation et le module redresseur auxiliaire.

D'autres caractéristiques et avantages vont apparaître dans la description détaillée qui suit en se référant à un mode de réalisation donné à titre d'exemple et représenté par les dessins annexés sur lesquels :
- la figure 1 représente un schéma simplifié d'un variateur de vitesse de type convertisseur de fréquence, utilisant un module redresseur principal et un module redresseur auxiliaire reliés à un module alimentation à découpage,
- la figure 2 schématise un retour par la terre dans un tel variateur de fréquence,
- les figures 3 & 4 montrent des schémas équivalents d'un premier et d'un deuxième chemins de rebouclage de courant en cas de défaut,
- la figure 5 montre le variateur de vitesse de la figure 1 avec un dispositif de commutation conforme à l'invention,
- la figure 6 détaille un mode de réalisation du dispositif de commutation.

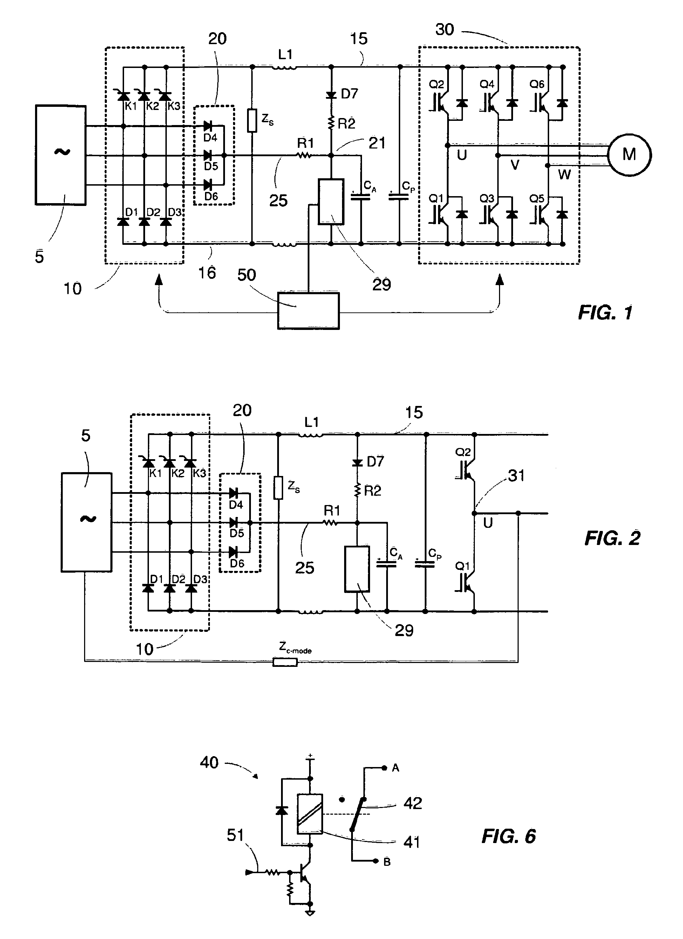

En référence à la figure 1, un variateur de vitesse de type convertisseur de fréquence est chargé de commander et de réguler la vitesse d'un moteur électrique triphasé M, par exemple un moteur asynchrone. Un tel variateur est alimenté par une source extérieure d'alimentation 5, tel qu'un réseau électrique triphasé. Le variateur comporte usuellement un module redresseur principal 10 comprenant des composants électroniques semi-conducteurs de puissance tels qu'une diode D1,D2,D3 et un thyristor de puissance K1,K2,K3 pour chaque phase du réseau électrique de façon à charger un bus continu principal 15.

Le variateur comporte également un module onduleur 30 comprenant des composants électroniques semi-conducteurs de puissance pour commander le moteur M avec une tension de commande de fréquence et amplitude variables. Le module onduleur 30 est alimenté par le bus principal 15 et comprend deux transistors de puissance Q1-Q2, Q3-Q4, Q5-Q6 pour chaque phase U,V,W de l'alimentation du moteur M.

Habituellement, avec un réseau extérieur triphasé de l'ordre de 380 à 460Vac, la valeur de la tension du bus principal 15 peut évoluer entre 400 et 800Vcc environ suivant le fonctionnement du moteur. La tension du bus principal 15 peut en effet augmenter jusqu'à environ 800Vcc dans les phases de freinage moteur, mais cette valeur de tension reste néanmoins toujours régulée par le variateur.

Les composants semi-conducteurs de puissance du module redresseur principal 10 et du module onduleur 30 sont pilotés par une unité de contrôle 50. Cette unité de contrôle peut indifféremment être composée d'une ou plusieurs entités distinctes pour piloter le module redresseur principal 10 d'un côté et le module onduleur 30 d'un autre côté. L'unité de contrôle est alimentée par un module alimentation 29 du variateur, préférentiellement de type alimentation à découpage. Ce module alimentation 29 est habituellement alimenté par le bus principal 15 et délivre la ou les basses tensions continues (par exemple 5V, 12V et/ou 24Vcc) nécessaires notamment au fonctionnement de la ou des unités de contrôle du variateur.

Néanmoins, au moment de la mise sous tension du variateur, le bus principal 15 n'est pas encore chargé et n'est donc pas capable de fournir du courant. Le module alimentation 29 n'est alors pas en mesure d'alimenter l'unité de contrôle 50, laquelle n'est pas capable non plus de piloter les thyristors K1,K2,K3 du module redresseur principal 10 empêchant ainsi de charger le bus principal 15. Il est donc nécessaire de fournir une source d'alimentation supplémentaire pour le module alimentation 29 lors de la mise sous tension du variateur, avant que le bus principal 15 ne soit chargé et stabilisé.

C'est pourquoi, le variateur comporte un module redresseur auxiliaire 20 connecté au réseau électrique extérieur 5 et comprenant une diode D4,D5,D6 pour chaque phase du réseau électrique de façon à charger un bus continu auxiliaire 25. Ce bus auxiliaire 25 est raccordé au module alimentation 29 via une première résistance R1. Grâce à ce module redresseur auxiliaire 20, l'unité de contrôle 50 peut être alimentée dès la mise sous tension du variateur de façon à être capable de piloter les thyristors de puissance K1,K2,K3 du module redresseur principal 10 pour charger le bus principal.

Le module alimentation 29 est relié au bus principal 15 via une seconde résistance R2 en série avec une diode D7 dont la cathode est dirigée du côté du module alimentation 29. La valeur de la seconde résistance R2 est inférieure à valeur de la première résistance R1. Ainsi, lorsque la tension du bus principal 15 est disponible, le module alimentation 29 est principalement alimenté par le bus principal 15 plutôt que par le bus auxiliaire 25, étant donné le rapport entre les valeurs des résistances R1 et R2.

Préférentiellement, la valeur de la première résistance R1 est assez forte (par exemple de l'ordre de 100 Ohms) de façon à limiter le courant de charge du bus auxiliaire 25 à la mise sous tension. Cette contrainte implique qu'il n'est pas souhaitable que le module alimentation 29 soit en permanence alimenté uniquement par le bus auxiliaire 25 car la forte valeur de R1 entraînerait alors des consommations élevées. C'est pourquoi la seconde résistance R2 est d'une valeur plus faible (par exemple de l'ordre d'une dizaine d'Ohms) de façon à privilégier l'alimentation du module 29 par le bus principal 15, une fois celui-ci chargé.

Entre la ligne positive 15 et la ligne négative 16 du bus principal, il existe un circuit d'amortissement (ou snubber circuit) représenté sur les figures de façon simplifiée par une impédance d'amortissement Z_{S}. Ce circuit d'amortissement est soit un circuit RC avec une résistance et une capacité ou préférentiellement un circuit RCD avec une résistance et une capacité en série avec une diode et une résistance en parallèle sur la diode. De plus, il existe une inductance de ligne L1 indiquée sur les lignes 15,16 du bus principal. Par ailleurs, entre la ligne positive 15 et la ligne négative 16 du bus principal, il existe une capacité de bus principal C_{P} et entre la ligne positive 25 et la ligne négative 16 du bus auxiliaire, il existe une capacité de bus auxiliaire C_{A}. Ces capacités de bus sont généralement électrolytiques et imposent des mises en charge progressives des bus et donc de limiter les courants de charge des bus.

Selon la variante de la figure 1, la seconde résistance R2 est connectée entre un noeud de connexion 21 directement relié au module alimentation 29 et le bus principal 15 et la première résistance R1 est connectée entre le noeud de connexion 21 et le bus auxiliaire 25. Selon une variante équivalente, on pourrait placer la seconde résistance R2 entre le noeud de connexion 21 et le module alimentation 29. Dans ce cas, la valeur de la résistance entre le module alimentation 29 et le bus auxiliaire 25 serait égale à R1 + R2, et la valeur de la résistance entre le module alimentation 29 et le bus principal 15 serait uniquement égale à R2, ce qui reste inférieur à R1 + R2.

La figure 2 montre le variateur de la figure 1 dans lequel figure une connexion par la terre à travers une impédance de mode commun Z_{c-mode} entre une des phases du moteur M, en l'occurrence la phase U, et le réseau d'alimentation extérieur 5. Une telle éventualité peut se produire lorsqu'il existe un faible défaut de terre (léger court-circuit entre une phase du moteur et la terre) avec une impédance Z_{c-mode} suffisamment élevée pour que les dispositifs de protection habituels contre ce type de défaut ne déclenchent pas. Une telle éventualité peut également se produire sans défaut de terre mais lorsque l'on utilise de grandes longueurs de câbles moteur blindés, c'est-à-dire en cas d'éloignement du moteur par rapport au variateur ou en cas de commande de plusieurs petits moteurs en parallèle avec le même variateur.

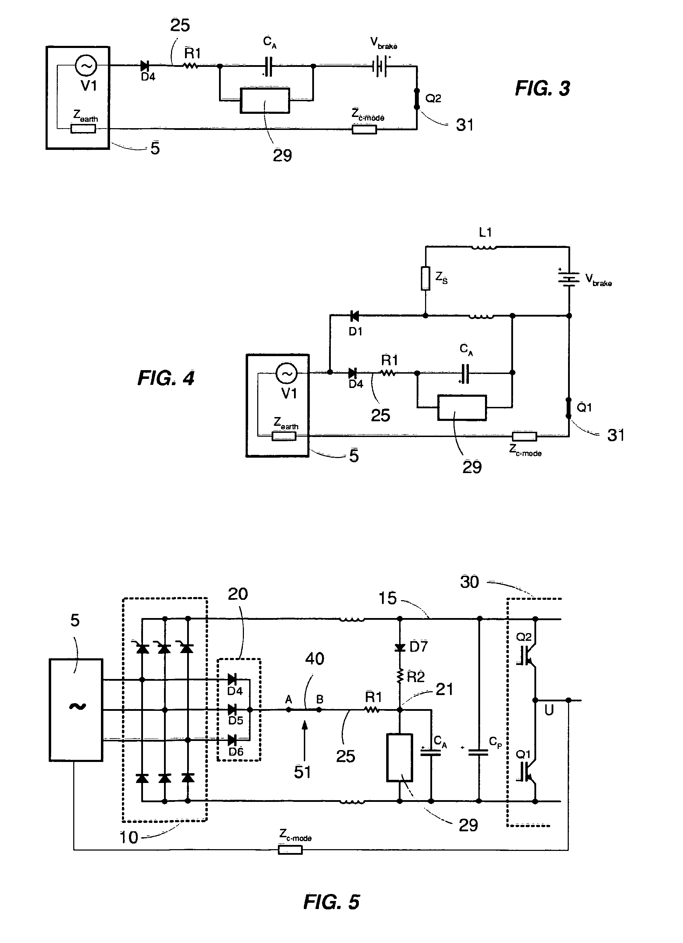

Lorsqu'une telle connexion à la terre existe, le principe d'alimentation proposé peut alors conduire à des rebouclages dont les schémas équivalents sont indiqués aux figures 3 et 4 suivant le transistor de puissance passant, respectivement Q2 ou Q1, en supposant une connexion par la terre à travers la phase U du moteur.

Dans les figures 3 et 4, le variateur est en phase de freinage moteur ce qui entraîne une tension importante du bus principal 15, indiquée par V_{brake}. Le premier chemin de rebouclage de la figure 3 est un chemin direct qui passe par le réseau extérieur 5 fournissant une tension phase-terre alternative positive V1, une des diodes D4, D5 ou D6 du module redresseur auxiliaire 20, la première résistance R1, le module alimentation 29 et la capacité de bus auxiliaire C_{A}, le générateur de tension V_{brake} du bus principal, le transistor Q2 du module onduleur 30 et un rebouclage par la terre via l'impédance Z_{c-mode} et l'impédance de terre Zₑₐᵣₜₕ du réseau 5. Dans ce premier chemin de rebouclage, le courant de terre circule directement à travers le bus auxiliaire 25 et charge la capacité de bus auxiliaire C_{A}. L'impédance de terre Zₑₐᵣₜₕ du réseau 5 dépend notamment de la topologie du réseau électrique (TT, TN ou IT).

Le second chemin de rebouclage de la figure 4 est un chemin indirect qui survient quand la tension alternative V1 est négative et que le transistor Q1 est conducteur. Dans ce cas, le courant de terre ne circule pas directement à travers le bus auxiliaire 25 et la capacité de bus auxiliaire C_{A}. Mais, durant la transition entre Q1 et Q2 ou en cas de variation du courant de terre, le retour de courant d'une des diodes D1,D2 ou D3 peut également charger le bus auxiliaire 25.

L'effet de charge dépend de la fréquence de commutation de Q1 et Q2, de la valeur de la tension V1 et de la valeur de l'impédance totale de terre : Z_{c-mode} + Zₑₐᵣₜₕ. Lorsque la tension du bus principal 15 est forte, par exemple V_{brake} = 800 V et que la première résistance R1 est de l'ordre d'une centaine d'ohms, alors la tension du bus auxiliaire 25 peut atteindre des valeurs allant jusqu'à 1400 Vcc car cette tension n'est pas régulée comme celle du bus principal 15. Une telle tension peut alors endommager gravement le module alimentation 29 et la capacité de bus auxiliaire C_{A}.

C'est pourquoi l'invention prévoit un dispositif de commutation 40 indiqué en figure 5 qui permet avantageusement d'isoler le module alimentation 29 du circuit redresseur auxiliaire 20, empêchant les rebouclages tels que ceux indiqués dans les figures 3 et 4. Ce dispositif de commutation 40 est commandé par l'unité de contrôle 50 à travers un ordre 51. Préférentiellement, il comporte une bobine de commande 41 agissant sur un contact à ouverture 42, c'est-à-dire normalement fermé, comme détaillé en figure 6. Lorsque l'ordre 51 n'est pas activé, le contact 42 est passant et le module alimentation 29 est relié au module redresseur auxiliaire 20. Lorsque l'ordre 51 est activé, le contact 42 est ouvert, isolant le module alimentation 29 du module redresseur auxiliaire 20.

L'ordre 51 est activé par l'unité de contrôle 50 lorsque par exemple celle-ci détecte, à l'aide de moyens de mesure appropriés, que la tension du bus principal 15 est supérieure ou égale à un seuil prédéterminé, suffisant pour que le bus principal 15 soit capable d'alimenter le module alimentation 29.

La méthode de mise sous tension du variateur est alors la suivante :
- Durant une première étape, au moment de la mise sous tension du variateur, le réseau extérieur 5 fournit une tension qui permet au module redresseur auxiliaire 20 d'alimenter rapidement le module alimentation 29 via la première résistance R1, car le dispositif de commutation 40 est normalement fermé et donc conducteur en l'absence de tension sur l'ordre 51. Cette étape permet de mettre sous tension l'unité de contrôle 50.
- Dans une seconde étape, lorsque l'unité de contrôle 50 est alimentée, elle pilote les thyristors de puissance K1,K2,K3 du module redresseur principal 10 de façon à pouvoir charger le bus continu principal 15 à partir de la tension du réseau extérieur 5. Au cours de cette étape, lorsque le bus principal 15 sera opérationnel, le module alimentation 29 sera alors principalement alimenté par le bus principal 15 via la seconde résistance R2, étant que R2 est supérieure à R1.
- Dans une troisième étape, l'unité de contrôle 50 ouvre le dispositif de commutation 40 placé entre le module alimentation 29 et le module redresseur auxiliaire 20 de façon à isoler le module alimentation 29 du module redresseur auxiliaire 20 et éviter ainsi les éventuels circuits de rebouclage parasites indiqués aux figures 3 et 4. Pour cela, l'unité de contrôle 50 envoie un ordre 51, par exemple suite au franchissement d'un seuil de tension du bus principal 15 ou plus simplement suite à l'écoulement d'une temporisation.

Il est bien entendu que l'on peut, sans sortir du cadre de l'invention, imaginer d'autres variantes et perfectionnements de détail et de même envisager l'emploi de moyens équivalents.

## Revendications

1. Variateur de vitesse pour moteur électrique (M), comprenant :
- un module redresseur principal (10) comportant des thyristors de puissance (K1,K2,K3) pour alimenter un bus continu principal (15) à partir d'un réseau d'alimentation extérieur (5),
- un module onduleur (30) fournissant une tension de commande variable au moteur (M) à partir du bus principal (15),
- un module redresseur auxiliaire (20) relié au réseau d'alimentation extérieur (5),
- une unité de contrôle électronique (50) commandant les thyristors de puissance (K1,K2,K3),
- un module alimentation (29) alimentant l'unité de contrôle (50) à partir du module redresseur auxiliaire (20) et du module redresseur principal (10),
ledit variateur de vitesse comportant un dispositif de commutation (40) piloté par l'unité de contrôle (50) et raccordé entre le module alimentation (29) et le module redresseur auxiliaire (20).

2. Variateur de vitesse selon la revendication 1, **caractérisé en ce que** le dispositif de commutation (40) comprend un relais ayant une bobine de commande (41) commandée par l'unité de contrôle (50) et un contact à ouverture (42) raccordé entre le module d'alimentation (29) et le module redresseur auxiliaire (20).

3. Variateur de vitesse selon la revendication 1, **caractérisé en ce que** l'unité de contrôle (50) comporte des moyens de mesure de la tension du bus principal (15) et commande l'ouverture du dispositif de commutation (40) lorsque la tension du bus principal est supérieure à un seuil prédéterminé.

4. Variateur de vitesse selon la revendication 1, **caractérisé en ce qu'**une première résistance (R1) est connectée entre le module alimentation (29) et le module redresseur auxiliaire (20) et une seconde résistance (R2), de valeur inférieure à la première résistance (R1), est connectée entre le module alimentation (29) et le bus principal (15).

5. Variateur de vitesse selon la revendication 4, **caractérisé en ce qu'**une diode (D7) est connectée en série avec la seconde résistance (R2) entre le module alimentation (29) et le bus principal (15).

6. Variateur de vitesse selon la revendication 1, **caractérisé en ce que** le module redresseur auxiliaire (20) comporte une diode (D4,D5,D6) pour chaque phase du réseau extérieur.

7. Variateur de vitesse selon la revendication 1, **caractérisé en ce que** le module redresseur principal (10) comporte une diode (D1,D2,D3) et un thyristor (K1,K2,K3) de puissance pour chaque phase du réseau extérieur.

8. Variateur de vitesse selon la revendication 1, **caractérisé en ce que**, pour chaque phase d'alimentation du moteur (M), le module onduleur (30) comporte deux transistors de puissance (Q1,Q2,Q3,Q4,Q5,Q6) pilotés par l'unité de contrôle (50).

9. Variateur de vitesse selon la revendication 1, **caractérisé en ce que** le module alimentation (29) est un modulé alimentation à découpage.

10. Méthode de mise sous tension d'un variateur de vitesse qui comprend :
- un module redresseur principal (10) comportant des thyristors de puissance (K1,K2,K3) pour alimenter un bus continu principal (15) à partir d'un réseau d'alimentation extérieur (5),
- un module onduleur (30) fournissant une tension de commande variable à un moteur électrique (M) à partir du bus principal (15),
- un module redresseur auxiliaire (20) relié au réseau d'alimentation extérieur (5),
- une unité de contrôle électronique (50) commandant les thyristors de puissance (K1,K2,K3) et alimentée par un module alimentation (29) à partir du module redresseur auxiliaire (20) et du module redresseur principal (10), et ladite méthode comportant :
- une première étape dans laquelle le module alimentation (29) est alimenté par le module redresseur auxiliaire (20),
- une seconde étape dans laquelle l'unité de contrôle (50) pilote les thyristors de puissance (K1 ,K2,K3) pour charger le bus continu principal (15),
- une troisième étape dans laquelle l'unité de contrôle (50) ouvre un dispositif de commutation (40) placé entre le module alimentation (29) et le module redresseur auxiliaire (20).

11. Méthode de mise sous tension selon la revendication 10, **caractérisée en ce que** l'unité de contrôle (50) ouvre le dispositif de commutation (40) lorsque la tension du bus principal (15) est supérieure à un seuil prédéterminé.

## Claims

1. A variable speed drive for an electric motor (M), comprising :
- a main rectifier module (10) including power thyristors (K1,K2,K3) to power a main continuous bus (15) from an external power network (5),
- an inverter module (30) delivering a variable control voltage to the motor (M) from the main bus (15),
- an auxiliary rectifier module (20) connected to the external power network (5),
- an electronic control unit (50) controlling the power thyristors (K1 ,K2,K3),
- a powering module (29) supplying the control unit (50) from the auxiliary rectifier module (20) and from the main rectifier module (10),
the said variable speed drive comprising a switching device (40) controlled by the control unit (50) and connected between the powering module (29) and the auxiliary rectifier module (20).

2. The variable speed drive according to Claim 1, wherein the switching device (40) comprises a relay having a control coil (41) controlled by the control unit (50) and a break contact (42) connected between the powering module (29) and the auxiliary rectifier module (20).

3. The variable speed drive according to Claim 1, wherein the control unit (50) comprises means for measuring the voltage of the main bus (15) and orders the opening of the switching device (40) when the voltage of the main bus is higher than a predetermined threshold.

4. The variable speed drive according to Claim 1, wherein a first resistance (R1) is connected between the powering module (29) and the auxiliary rectifier module (20), and a second resistance (R2), lower in value than the first resistance (R1), is connected between the powering module (29) and the main bus (15).

5. The variable speed drive according to Claim 4, wherein a diode (D7) is connected in series with the second resistance (R2) between the powering module (29) and the main bus (15).

6. The variable speed drive according to Claim 1, wherein the auxiliary rectifier (20) module comprises a diode (D4;D5,D6) for each phase of the external power network.

7. The variable speed drive according to Claim 1, wherein the main rectifier module (10) comprises a diode (D1,D2,D3) and a power thyristor (K1,K2,K3) for each phase of the external power network.

8. The variable speed drive according to Claim 1, wherein, for each powering phase for the motor (M), the inverter module (30) comprises two power transistors (Q1,Q2,Q3,Q4,Q5,Q6) controlled by the control unit (50).

9. The variable speed drive according to Claim 1, wherein the powering module (29) is a switch mode power supply module.

10. A method for powering up a variable speed drive which comprises:
- a main rectifier module (10) including power thyristors (K1,K2,K3) to power a main (15) continuous bus from an external power network (5),
- an inverter module (30) delivering a variable control voltage to an electric motor (M) from the main bus (15),
- an auxiliary rectifier module (20) connected to the external power network (5),
- an electronic control unit (50) controlling the power thyristors (K1,K2,K3) and powered by a powering module (29) from the auxiliary rectifier module (20) and from the main rectifier module (10), the said method comprising :
- a first step in which the powering module (29) is powered by the auxiliary rectifier module (20),
- a second step in which the control unit (50) controls the power thyristors (K1,K2,K3) in order to charge the main continuous bus (15),
- a third step in which the control unit (50) opens a switching device (40) placed between the powering module (29) and the auxiliary rectifier module (20).

11. The powering-up method according to Claim 10, wherein the control unit (50) opens the switching device (40) when the voltage of the main bus (15) is higher than a predetermined threshold.

## Patentansprüche

1. Umrichter für einen Elektromotor (M), der aufweist:
- einen Hauptgleichrichtermodul (10), der Leistungsthyristoren (K1, K2, K3) aufweist, um einen Hauptgleichspannungsbus (15) ausgehend von einem externen Versorgungsnetz (5) zu versorgen,
- einen Wechselrichtermodul (30), der ausgehend vom Hauptbus (15) eine variable Steuerspannung an den Motor (M) liefert,
- einen Hilfsgleichrichtermodul (20), der mit dem externen Versorgungsnetz (5) verbunden ist,
- eine elektronische Steuereinheit (50), die die Leistungsthyristoren (K1, K2, K3) steuert,
- einen Versorgungsmodul (29), der die Steuereinheit (50) ausgehend vom Hilfsgleichrichtermodul (20) und vom Hauptgleichrichtermodul (10) versorgt,
wobei der Umrichter eine Schaltvorrichtung (40) aufweist, die von der Steuereinheit (50) gesteuert wird und zwischen dem Versorgungsmodul (29) und dem Hilfsgleichrichtermodul (20) angeschlossen ist.

2. Umrichter nach Anspruch 1, **dadurch gekennzeichnet, dass** die Schaltvorrichtung (40) ein Relais mit einer Steuerspule (41), die von der Steuereinheit (50) gesteuert wird, und einen Öffnungskontakt (42) aufweist, der zwischen dem Versorgungsmodul (29) und dem Hilfsgleichrichtermodul (20) angeschlossen ist.

3. Umrichter nach Anspruch 1, **dadurch gekennzeichnet, dass** die Steuereinheit (50) Mittel zur Messung der Spannung der Hauptbusleitung (15) aufweist und die Öffnung der Schaltvorrichtung (40) steuert, wenn die Spannung der Hauptbusleitung höher ist als ein vorbestimmter Schwellwert.

4. Umrichter nach Anspruch 1, **dadurch gekennzeichnet, dass** ein erster Widerstand (R1) zwischen dem Versorgungsmodul (29) und dem Hilfsgleichrichtermodul (20) verbunden ist, und ein zweiter Widerstand (R2) von geringerem Wert als der erste Widerstand (R1) zwischen den Versorgungsmodul (29) und den Hauptbus (15) geschaltet ist.

5. Umrichter nach Anspruch 4, **dadurch gekennzeichnet, dass** eine Diode (D7) in Reihe mit dem zweiten Widerstand (R2) zwischen den Versorgungsmodul (29) und den Hauptbus (15) geschaltet ist.

6. Umrichter nach Anspruch 1, **dadurch gekennzeichnet, dass** der Hilfsgleichrichtermodul (20) eine Diode (D4, D5, D6) für jede Phase des externen Netzes aufweist.

7. Umrichter nach Anspruch 1, **dadurch gekennzeichnet, dass** der Hauptgleichrichtermodul (10) eine Diode (D1, D2, D3) und einen Leistungsthyristor (K1, K2, K3) für jede Phase des externen Netzes aufweist.

8. Umrichter nach Anspruch 1, **dadurch gekennzeichnet, dass** der Wechselrichtermodul (30) für jede Versorgungsphase des Motors (M) zwei Leistungstransistoren (Q1, Q2, Q3, Q4, Q5, Q6) aufweist, die von der Steuereinheit (50) gesteuert werden.

9. Umrichter nach Anspruch 1, **dadurch gekennzeichnet, dass** der Versorgungsmodul (29) ein Schaltnetzteilmodul ist.

10. Verfahren zum Unterspannungsetzen eines Umrichters, der aufweist:
- einen Hauptgleichrichtermodul (10), der Leistungsthyristoren (K1, K2, K3) aufweist, um einen Hauptgleichspannungsbus (15) ausgehend von einem externen Versorgungsnetz (5) zu versorgen,
- einen Wechselrichtermodul (30), der ausgehend vom Hauptbus (15) eine variable Steuerspannung an einen Elektromotor (M) liefert,
- einen Hilfsgleichrichtermodul (20), der mit dem externen Versorgungsnetz (5) verbunden ist,
- eine elektronische Steuereinheit (50), die die Leistungsthyristoren (K1, K2, K3) steuert und von einem Versorgungsmodul (29) ausgehend vom Hilfsgleichrichtermodul (20) und vom Hauptgleichrichtermodul (10) versorgt wird,
wobei das Verfahren aufweist:
· einen ersten Schritt, in dem der Versorgungsmodul (29) vom Hilfsgleichrichtermodul (20) versorgt wird,
. einen zweiten Schritt, in dem die Steuereinheit (50) die Leistungsthyristoren (K1, K2, K3) steuert, um den Hauptgleichspannungsbus (15) zu laden,
. einen dritten Schritt, in dem die Steuereinheit (50) eine Schaltvorrichtung (40) öffnet, die zwischen dem Versorgungsmodul (29) und dem Hilfsgleichrichtermodul (20) angeordnet ist.

11. Verfahren zum Unterspannungsetzen nach Anspruch 10, **dadurch gekennzeichnet, dass** die Steuereinheit (50) die Schaltvorrichtung (40) öffnet, wenn die Spannung der Hauptbusleitung (15) höher als ein vorbestimmter Schwellwert ist.
